# EUROPÄISCHE PATENTANMELDUNG

(11) **EP 0 682 097 A2**
(43) Veröffentlichungstag der Anmeldung: **15.11.1995**
(21) Anmeldenummer: 95102952.9
(22) Anmeldetag: 02.03.1995
(51) Int. Cl.: C09K 3/14

(54) **Mittel zur Erhöhung der Haftreibung zwischen zwei Oberflächen**

(30) Priorität: 14.05.1994 DE 4417030
(71) Anmelder: Jakob, Bernhard, Loughlinstown, Co. Dublin (IE); Klemm, Michael, D-42781 Haan (DE)
(72) Erfinder: Jakob, Bernhard, Loughlinstown, Co. Dublin (IE); Klemm, Michael, D-42781 Haan (DE)
(74) Vertreter: Stenger, Watzke & Ring Patentanwälte

(57) **Zusammenfassung**

Ein Mittel zur Erhöhung der Haftreibung zwischen zwei insbesondere metallischen Oberflächen enthält zumindest eine gelartige oder pastöse, die Viskosität des Mittels bestimmende Komponente sowie darin enthaltene Hartkristalle aus Siliziumcarbid, wobei die Mehrheit der Hartkristalle einer ersten Gruppe mit im wesentlichen gleicher Korngröße und einer zweiten Gruppe mit im wesentlichen gleicher Korngröße angehört, und die Korngrößen der beiden Gruppen in einem festen, vorzugsweise geradzahligen Größenverhältnis zueinander stehen. Mit einem solchen Mittel läßt sich eine außergewöhnlich große Haftreibung zwischen metallischen Oberflächen erreichen, um z.B. die Griffigkeit zwischen einer Werkzeugklinge (3) und einem Werkstück (4) zu erhöhen.

## Beschreibung

Die Erfindung betrifft ein Mittel zur Erhöhung der Haftreibung zwischen zwei Oberflächen, vor allem zwei metallischen Oberflächen.

Schrauben neigen, da sie oft aus relativ weichen Metallen bestehen, beim mehrfachen Anziehen und Lösen mittels eines Schraubendrehers, Schraubenschlüssels etc. leicht zum "Ausfransen" der Werkzeugangriffsflächen. Eine solche Schraube ist oft auch mit exakt gearbeiteten und gut geschliffenen Werkzeugen nicht mehr zu lösen, da die Werkzeugangriffsflächen der Schraube dem Werkzeug keinen genügenden Halt mehr bieten. Tritt dieses Problem bei einer festsitzenden Schraube auf, bleibt oft nur die Möglichkeit, die Schraube aufzubohren, wobei oftmals die von der Schraube zusammengehaltenen Teile in Mitleidenschaft gezogen werden.

Zur Lösung dieses Problems sind Pasten bekannt, mit denen sich die Reibung an den Kontaktflächen zwischen Werkzeug und Werkstück erhöhen läßt. Die bekannten Pasten bringen jedoch nur dann einen wirklichen Vorteil, wenn die Werkzeugangriffsflächen des Werkstückes noch nicht allzu stark verletzt sind. Bei bereits stark in Mitleidenschaft gezogenen Werkzeugangriffsflächen sind auch die bekannten Pasten nicht mehr in der Lage, die erforderliche Haftreibung für einen sicheren Griff des Werkzeuges zu erzeugen.

Der Erfindung liegt die **Aufgabe** zugrunde, ein einfach anzuwendendes Mittel zu schaffen, mit dem sich eine außergewöhnlich große Haftreibung zwischen Oberflächen und insbesondere metallischen Oberflächen erreichen läßt.

Zur **Lösung** dieser Aufgabe wird zunächst ein Mittel zur Erhöhung der Haftreibung zwischen zwei Oberflächen, vor allem zwei metallischen Oberflächen vorgeschlagen, enthaltend zumindest eine gelartige oder pastöse, die Viskosität des Mittels bestimmende Komponente sowie darin enthaltene Hartkristalle, wobei die Mehrheit der Hartkristalle einer ersten Gruppe mit im wesentlichen gleicher Korngröße und einer zweiten Gruppe mit im wesentlichen gleicher Korngröße angehört, und die Korngrößen der beiden Gruppen in einem festen, vorzugsweise geradzahligen Größenverhältnis zueinander stehen.

Versuche haben gezeigt, daß die Verwendung solcherart unterschiedlicher Korngrößen zu einer beträchtlichen Erhöhung des zwischen metallischen Oberflächen wirkenden Haftreibungswiderstandes führt. Ursächlich hierfür ist, daß sich die unterschiedlich großen Körner der beiden Korngruppen besonders gut ineinander fügen, und damit zueinander verkeilen.

Dieser Effekt ist dann besonders ausgeprägt, wenn Hartkristalle aus Siliziumcarbid verwendet werden. Diese Kristalle weisen eine hexagonale Kristallstruktur auf, die mehr als jede andere Kristallstruktur ein Zusammenfügen und damit Verkeilen der einzelnen Körner ermöglicht, so daß zwischen den Oberflächen hohe Haftreibungskräfte möglich werden. Eine optimale Wirkung wird erzielt, wenn der Gewichtsanteil der Siliziumcarbid-Kristalle 20 bis 60 % beträgt.

Zur **Lösung** der genannten Aufgabe wird ferner ein Mittel zur Erhöhung der Haftreibung zwischen zwei Oberflächen, vor allem zwei metallischen Oberflächen vorgeschlagen, enthaltend zumindest eine gelartige oder pastöse, die Viskosität des Mittels bestimmende Komponente sowie darin mit einem Gewichtsanteil zwischen 20 % und 60 % eingelagerte Siliziumcarbid-Kristalle.

Der Verzahnungs- bzw. Verkeilungseffekt zwischen den beteiligten metallischen Oberflächen wird in diesem Fall bereits durch die Verwendung der besonders harten und durch ihre hexagonale Kristallstruktur besonders griffigen Körner aus Siliziumcarbid erreicht. Hierbei ist es von zusätzlichem Vorteil, wenn gemäß einer bevorzugten Weiterbildung des Mittels die Mehrheit der Siliziumcarbid-Kristalle einer ersten Gruppe mit im wesentlichen gleicher Korngröße und einer zweiten Gruppe mit im wesentlichen gleicher Korngröße angehört, und die Korngrößen der beiden Gruppen in einem festen, vorzugsweise geradzahligen Größenverhältnis zueinander stehen. Auch in diesem Fall führt die Verwendung von zwei Korngruppen unterschiedlicher Körnung zu einem besonders guten Verzahnen der einzelnen Kristalle, da die zwischen den großen Körnern verbleibenden Hohlräume leicht durch die kleineren Körner der anderen Gruppe ausgefüllt werden, so daß der Effekt einer Verkeilung der Kristalle eintritt, was wiederum zu einer Steigerung der zwischen den beteiligten Oberflächen entstehenden Haftreibungskräften führt.

Gemäß einer Weiterbildung der Erfindung wird vorgeschlagen, daß die Teilchengröße der größeren Hartkristalle zwischen 125 und 750 µm beträgt. Dieser Körnungsbereich hat sich bei Verwendung des Mittels für Handwerkzeuge, wie Schraubendreher, Schraubenschlüssel etc. als besonders geeignet herausgestellt.

Von besonderem Vorteil ist es ferner, wenn die Hartkristalle der ersten Gruppe in einem Korngrößenverhältnis von 2:1 zu den Hartkristallen der zweiten Gruppe stehen, welche aus den kleineren Körnern besteht. Bei Verwendung eines solchen Verhältnisses der Korngrößen tritt eine besonders intensive und nahezu lückenfreie Verzahnung der einzelnen Körner bzw. Kristalle ein.

Eine vorteilhafte Weiterbildung des Mittels ist ferner gekennzeichnet durch den Zusatz eines Farbstoffs mit 0,5 bis 5 Gewichts-%. Durch Zugabe eines Farbstoffs wird die Möglichkeit eröffnet, das jeweilige Mittel farblich zu kennzeichnen, um dem Benutzer so den jeweiligen Anwendungsbereich des betreffenden Mittels zu signalisieren. Insbesondere kann die Eignung des Mittels für eine bestimmte, zueinander passende Werkstück- und Werkzeuggröße, durch eine entsprechende Einfärbung des Mittels angezeigt werden.

Zur **Lösung** der der Erfindung zugrundeliegenden Aufgabe wird ferner eine Mischung, insbesondere zur Verwendung als haftreibungserhöhender Zusatz zwischen metallischen Oberflächen vorgeschlagen, welche durch die folgenden, in Gewichts-% ausgedrückten Mischungsbestandteile gekennzeichnet ist:

| | |
|---|---|
| 1. Siliziumcarbid-Kristalle | 20 - 60 % |
| 2. Geliermittel | 1,2 - 15 % |
| 3. Wasser | 35 - 75 %. |

Weitere Einzelheiten der Erfindung werden nachfolgend anhand der Zeichnungen erläutert. Darin zeigen:
- Fig. 1: in einer perspektivischen Darstellung den Kopf einer Kreuzschlitzschraube sowie die Klinge eines Kreuzschlitz-Schraubendrehers mit stark vergrößert dargestellten Kristallen eines die Haftreibung erhöhenden Mittels und
- Fig. 2: in perspektivischer Darstellung den Kopf einer Schlitzschraube sowie die Klinge eines Schlitz-Schraubendrehers mit stark vergrößert dargestellten Kristallen eines die Haftreibung erhöhenden Mittels.

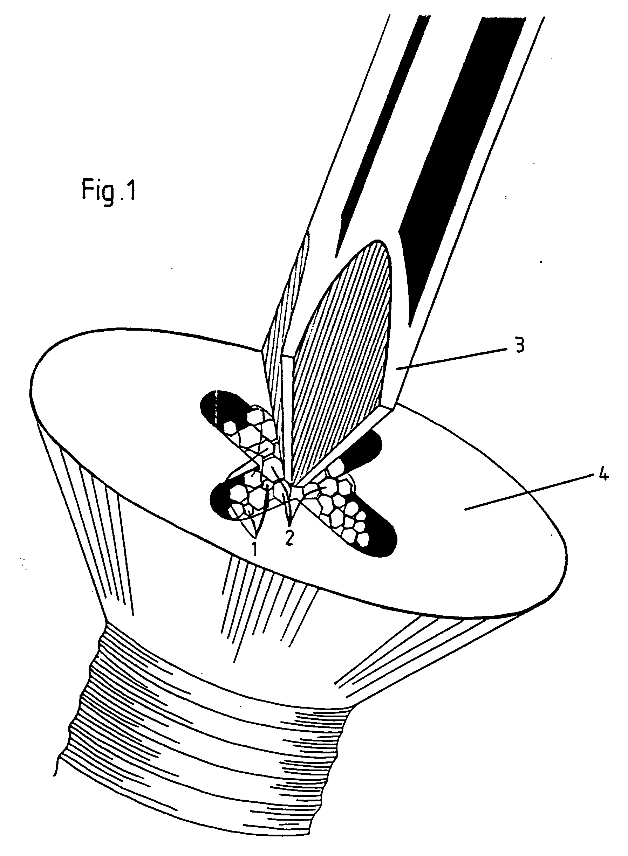

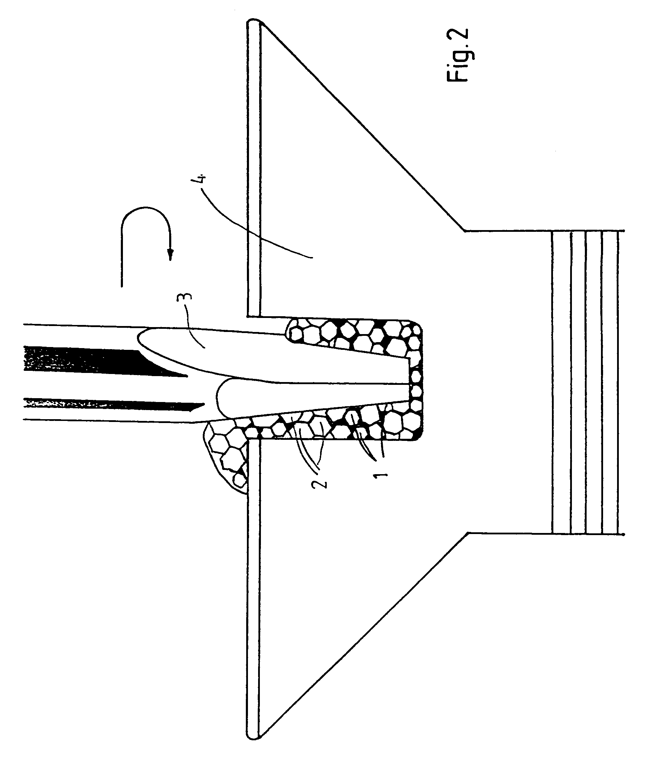

Der kreuzförmige Schlitz der in Fig. 1 dargestellten Schraube weist nicht mehr die erforderliche Scharfkantigkeit auf, um der Klinge des oberhalb dargestellten Werkzeuges genügend Angriffsfläche zu bieten. Vor Ansetzen des Werkzeuges wird daher ein gelartiges oder pastöses Mittel, welches Kristalle aus Siliziumcarbid enthält, in den Kreuzschlitz der Schraube hineingegeben. In den Figuren 1 und 2 sind die in der Paste oder dem Gel enthaltenden Siliziumcarbid-Kristalle stark vergrößert dargestellt. In den Zeichnungen ist angedeutet, daß die Kristalle eine hexagonale Struktur aufweisen, wobei die Kristalle eine unterschiedliche Größe aufweisen.

Eine erste Gruppe der Siliziumcarbid-Kristalle wird durch relativ kleine Kristalle 1 gebildet, während eine zweite Gruppe durch deutlich größere Kristalle 2 gebildet wird. Die Korngröße der Kristalle 2 ist etwa doppelt so groß wie die Korngröße der Kristalle 1. Diese Korngrößenverteilung führt im Zusammenwirken mit dem hexagonalen Kristallaufbau zu einer ausgeprägten Verzahnung bzw. Verkeilung der einzelnen Kristallkörner, so daß, wie insbesondere Fig. 2 erkennen läßt, zwischen den metallischen Oberflächen von Werkzeug 3 einerseits und Werkstück 4 andererseits eine große Packungsdichte der Kristallkörner entsteht, bei der die kleinen Körner 1 sich in den zwischen den großen Körnern 2 verbleibenden Hohlräumen festsetzen. Dieser Effekt ist dann besonders ausgeprägt, wenn das Korngrößenverhältnis zwischen den beiden Gruppen von Kristallen 2:1 beträgt. Die angestrebte Verzahnung der einzelnen Kristalle wird aber auch dann bereits erreicht, wenn die Größe der größeren Kristalle ein geradzahliges Vielfaches der Größe der kleineren Kristalle beträgt. Das Mischungsverhältnis zwischen den Kristallen der großen Korngrößenfraktion und den Kristallen der kleinen Korngrößenfraktion beträgt zwischen 1:1 und 1:2.

Um dem Mittel die für eine tropfenweise Dosierung erforderliche Konsistenz zu verleihen, wird als Basis Wasser verwendet, welches mittels eines Geliermittels die gewünschte Viskosität erhält, so daß ein Gel oder eine Paste entsteht. Bevorzugt kommt ein Geliermittel auf Bentonitbasis zur Anwendung, wobei Farbstoffe zugefügt werden können, um die Mischung für den jeweils günstigsten Anwendungsfall zu kennzeichnen.

Wird die gelartige Mischung verwendet, um die Griffigkeit von Handwerkzeugen und insbesondere Schraubendrehern zu erhöhen, werden besonders gute Ergebnisse dann erzielt, wenn die größer gekörnten Kristalle einen Durchmesser von etwa 125 bis 750 µm aufweisen. Der entsprechende Durchmesser der kleineren Korngrößenfraktion beträgt dann 60 bis 375 µm. Die Siebungen beziehen sich auf Messungen nach DIN 69101.

Eine zur Herstellung des Mittels geeignete Mischung wird nachfolgend angegeben:

| | |
|---|---|
| 1. Siliziumcarbid-Kristalle | 20 - 60 % |
| 2. Geliermittel (Bentonit) | 1,2 - 15 % |
| 3. Wasser | 35 - 75 %. |

Das verwendete Geliermittel auf Bentonitbasis ist im Wasser gut quellfähig und weist eine hochthixotrope Verdickungswirkung auf. Es verhindert das Absetzen schwerer Pigmente/Extender und baut im wässrigen System eine Fließgrenze auf, wodurch die gewünschte Tropffestigkeit der Mischung erreicht wird. Das Mittel läßt sich daher auch bei Schraubarbeiten über Kopf einsetzen.

## Patentansprüche

1. Mittel zur Erhöhung der Haftreibung zwischen zwei Oberflächen, vor allem zwei metallischen Oberflächen, enthaltend zumindest eine gelartige oder pastöse, die Viskosität des Mittels bestimmende Komponente sowie darin enthaltene Hartkristalle, wobei die Mehrheit der Hartkristalle einer ersten Gruppe mit im wesentlichen gleicher Korngröße und einer zweiten Gruppe mit im wesentlichen gleicher Korngröße angehört, und die Korngrößen der beiden Gruppen in einem festen, vorzugsweise geradzahligen Größenverhältnis zueinander stehen.

2. Mittel nach Anspruch 1, gekennzeichnet durch Hartkristalle aus Siliziumcarbid.

3. Mittel nach Anspruch 2, dadurch gekennzeichnet, daß der Gewichtsanteil der Siliziumcarbid-Kristalle 20 bis 60 % beträgt.

4. Mittel zur Erhöhung der Haftreibung zwischen zwei Oberflächen, vor allem zwei metallischen Oberflächen, enthaltend zumindest eine gelartige oder pastöse, die Viskosität des Mittels bestimmende Komponente sowie darin mit einem Gewichtsanteil zwischen 20 % und 60 % eingelagerte Siliziumcarbid-Kristalle.

5. Mittel nach Anspruch 4, dadurch gekennzeichnet, daß die Mehrheit der Siliziumcarbid-Kristalle einer ersten Gruppe mit im wesentlichen gleicher Korngröße und einer zweiten Gruppe mit im wesentlichen gleicher Korngröße angehört und die Korngrößen der beiden Gruppen in einem festen, vorzugsweise geradzahligen Größenverhältnis zueinander stehen.

6. Mittel nach einem der vorangehenden Ansprüche, dadurch gekennzeichnet, daß die Teilchengröße der größeren Hartkristalle zwischen 125 und 750 µm beträgt.

7. Mittel nach einem der Ansprüche 1 bis 3, 5 oder 6, dadurch gekennzeichnet, daß die Hartkristalle der ersten Gruppe in einem Korngrößenverhältnis von 2:1 zu den Hartkristallen der zweiten Gruppe stehen.

8. Mittel nach einem der vorangehenden Ansprüche, gekennzeichnet durch den Zusatz eines Farbstoffs mit 0,5 bis 5 Gewichts-%.

9. Mischung, insbesondere zur Verwendung als haftreibungserhöhender Zusatz zwischen metallischen Oberflächen, gekennzeichnet durch die folgenden Mischungsbestandteile in Gewichts-%:
| | |
|---|---|
| 1. Siliziumcarbidkristalle | 20 - 60 % |
| 2. Geliermittel | 1,2 - 15 % |
| 3. Wasser | 35 - 75 %. |

10. Mischung nach Anspruch 9, gekennzeichnet durch eine erste Gruppe von Siliziumcarbid-Kristallen mit im wesentlichen gleicher Korngröße und einer zweiten Gruppe von Siliziumcarbid-Kristallen mit im wesentlichen gleicher Korngröße, wobei die Korngrößen der beiden Gruppen in einem festen, vorzugsweise geradzahligen Größenverhältnis zueinander stehen.

11. Mischung nach Anspruch 9 oder Anspruch 10, dadurch gekennzeichnet, daß das Mischungsverhältnis zwischen den Kristallen der größeren Korngrößenfraktion und den Kristallen der kleineren Korngrößenfraktion zwischen 1:1 und 1:2 beträgt.

12. Mischung nach einem der Ansprüche 9 bis 11, gekennzeichnet durch den Zusatz eines Farbstoffs mit 0,5 bis 5 Gewicht-%.
